# EUROPÄISCHE PATENTSCHRIFT

(11) **EP 3 275 029 B1**
(45) Veröffentlichungstag und Bekanntmachung des Hinweises auf die Patenterteilung: **23.10.2019**
(21) Anmeldenummer: 16706206.6
(22) Anmeldetag: 25.02.2016
(51) Int. Cl.: H01M 2/10, H01M 2/20, H01M 10/613, H01M 10/655, H01M 10/647

(54) **BATTERIE MIT EINEM AUS EINEM PLATTENELEMENT HERGESTELLTEN BATTERIEGEHÄUSE UND VERFAHREN ZUR HERSTELLUNG EINER SOLCHEN BATTERIE**
BATTERY COMRISING A BATTERY HOUSING PRODUCED FROM A SHEET ELEMENT AND METHOD FOR PRODUCING A BATTERY OF THIS TYPE
BATTERIE COMPRENANT UN BOÎTIER DE BATTERIE PRODUIT D'UN ÉLÉMENT EN PLAQUE ET PROCÉDÉ DE FABRICATION D'UNE TELLE BATTERIE

(30) Priorität: 26.03.2015 DE 102015205485
(43) Veröffentlichungstag der Anmeldung: 31.01.2018
(73) Patentinhaber: Robert Bosch GmbH, 70442 Stuttgart (DE)
(72) Erfinder: PFLUEGER, Claus Gerald, 71706 Markröningen (DE); WIPFLER, Klaus, 75223 Niefern-Oeschelbronn (DE)
(86) Internationale Anmeldenummer: PCT/EP2016/053941
(87) Internationale Veröffentlichungsnummer: WO 2016/150640

(56) Entgegenhaltungen:
- DE-A1-102009 058 809
- GB-A- 848 050
- GB-A- 2 213 981
- JP-A- 2006 286 357
- JP-U- H0 478 757
- US-A- 3 381 880
- US-A1- 2012 003 505
- US-A1- 2012 045 686
- US-A1- 2013 224 547

## Beschreibung

### Stand der Technik

Die Erfindung geht aus von einer Batterie mit einem Batteriegehäuse nach Gattung des unabhängigen Anspruchs. Gegenstand der vorliegenden Erfindung ist auch ein Verfahren zur Herstellung einer solchen Batterie.

Während des Betriebes einer Batteriezelle führen als Quellung bezeichnete chemische Prozesse im Inneren zu einer Volumenausdehnung der Batteriezelle. Diese Ausdehnungsvorgänge sind bei einer Auslegung und Gestaltung eines Batteriegehäuses zu berücksichtigen.

Die Druckschrift DE 10 2013 008 588 A1 offenbart ein Aufnahmegehäuse zur Aufnahme mehrerer elektrischer Energiespeicher in einem Energiespeicheraufnahmeraum mit einer trog- bzw. wannenartigen Gestalt, welcher durch eine Bodenfläche bzw. Bodenwandung und eine Mehrzahl an Seitenflächen bzw. Seitenwandungen begrenzt ist. Zudem können die Bodenfläche und die Mehrzahl an Seitenflächen einstückig oder als separate miteinander verbundene Bauteile ausgebildet sein, wobei bei einer einstückigen Ausbildung des Aufnahmegehäuses dieses als Tiefziehteil, Faltteil oder Spritzgießteil ausgebildet ist. Weiterhin sind die die Bodenfläche und/oder die Mehrzahl an Seitenflächen ausbildenden Bauteile bzw. Materialabschnitte für eine Abdichtung des Energiespeicheraufnahmeraums insbesondere miteinander verschweißt.

Die Druckschrift JP 2006 286357 A offenbart eine Batterie mit einem kastenförmigen Batteriegehäuse, das aus einem einstückigen Plattenelement hergestellt werden kann.

Die Druckschrift GB 2 213 981 A offenbart einen wärmeisolierenden Mantel für eine Fahrzeugbatterie, der aus einem einstückigen Plattenelement hergestellt werden kann.

Die Druckschrift GB 848 050 A offenbart ein Metallgehäuse für elektrische Bauteile, das über Einstecklaschen zusammengefügt wird.

Die Druckschrift US 3 381 880 A offenbart einen kastenförmigen Behälter, der aus einem einstückigen ebenen Plattenelement durch das Einführen von Lamellen in Öffnungen zusammengefügt wird.

### Offenbarung der Erfindung

Die Batterie und das Verfahren zur Herstellung einer solchen Batterie mit den Merkmalen der unabhängigen Ansprüche haben den Vorteil, dass bei einer reversiblen Verbindung kein Fügeverfahren erforderlich ist. Im Unterschied dazu führen Fügeverfahren, wie insbesondere ein Schweiß- oder Lötverfahren, bei einer irreversiblen dauerhaften Verbindung zu irreversiblen Materialveränderungen der ersten Gehäusewand und/oder der zweiten Gehäusewand. Die reversible Verbindung benötigt demgegenüber Arbeitsschritte mit geringfügigen Materialdeformationen.

Erfindungsgemäß wird eine Batterie mit einem Batteriegehäuse zur Verfügung gestellt, welches eine erste Gehäusewand und eine zweite Gehäusewand aufweist. Dabei bildet die erste Gehäusewand ein erstes Befestigungselement aus und die zweite Gehäusewand ein zweites Befestigungselement. Vorteilhaft sind das erste Befestigungselement und das zweite Befestigungselement derart ausgebildet, dass das erste Befestigungselement und das zweite Befestigungselement zu einer Fixierung der ersten Gehäusewand relativ zu der zweiten Gehäusewand reversibel miteinander verbunden sind, so dass diese reversible Verbindung eine zuverlässige mechanische Stabilität der Verbindung von zwei Gehäusewänden des Batteriegehäuses während des Betriebes sicherstellt. Somit können die

Gehäusewände den auf einer Quellung einer Batterieeinheit basierenden Kräften entgegenwirken, ohne dass die Fixierung der ersten Gehäusewand relativ zu der zweiten Gehäusewand gelöst wird. Zudem ist eine Trennung mit so geringen Beschädigungen des ersten Befestigungselements und/oder des zweiten Befestigungselements möglich, dass eine erneute reversible Verbindung und gegebenenfalls eine erneute Verwendung des Batteriegehäuses möglich ist. Eine reversible Verbindung bedeutet im Sinn dieser Erfindung, dass ein Befestigungselement bei der Herstellung der reversiblen Verbindung so geringfügig beschädigt wird, dass eine Trennung der reversiblen Verbindung und eine erneute Herstellung der Verbindung möglich ist. Insbesondere bei einer kalten Verbindungstechnik hat dies den Vorteil, dass dadurch eine Herstellung des Batteriegehäuses mit kurzen Prozesszeiten und höchster Maßhaltigkeit möglich ist. Weiterhin wird der Schmutzeintrag reduziert.

Durch die in den abhängigen Ansprüchen aufgeführten Maßnahmen sind vorteilhafte Weiterbildungen und Verbesserungen der im unabhängigen Anspruch angegebenen Vorrichtung oder des im unabhängigen Anspruch angegeben Verfahren möglich.

Erfindungsgemäß ist das erste Befestigungselement als eine durch die erste Gehäusewand durchgehend verlaufende Öffnung ausgebildet und das zweite Befestigungselement als Lamellenelement an der zweiten Gehäusewand. Weiterhin können die erste Gehäusewand und die zweite Gehäusewand nach der reversiblen Verbindung zudem miteinander verschweißt werden, um das Batteriegehäuse abzudichten.

Von Vorteil ist es, wenn das Batteriegehäuse zumindest eine dritte Gehäusewand aufweist. Dabei ist die dritte Gehäusewand mit der ersten Gehäusewand und/oder mit der zweiten Gehäusewand einteilig verbunden ausgebildet oder irreversibel verbunden. Damit ist auf zuverlässige Weise eine feste Verbindung der dritten Gehäusewand mit der ersten Gehäusewand und/oder der zweiten Gehäusewand sichergestellt. Zudem ist das Batteriegehäuse an dieser Stelle so abgedichtet, dass keine Gefahr durch austretende und/oder eintretende Stoffe besteht. Insbesondere ist die irreversible Verbindung geschweißt.

Weiterhin vorteilhaft ist, wenn die erste Gehäusewand oder die zweite Gehäusewand oder die dritte Gehäusewand ein drittes Befestigungselement ausbildet. Zudem weist das Batteriegehäuse eine Abdeckung auf, welche ein viertes Befestigungselement ausbildet. Zu einer Fixierung der Abdeckung relativ zu der ersten, zweiten bzw. dritten Gehäusewand ist das vierte Befestigungselement reversibel mit einem dritten Befestigungselement verbunden. Dies hat den Vorteil, dass eine reversibel befestigte Abdeckung das Batteriegehäuse verschließen kann, insbesondere nur teilweise verschließen kann, oder Gehäusewände abdecken kann, insbesondere nur teilweise abdecken kann. Somit ist es möglich, mit der Abdeckung bestimmte Elemente der Batterie, wie beispielsweise elektrische Anschlüsse, insbesondere während des Betriebes, vor Umwelteinflüssen oder mechanischer Belastung zu schützen. Weiterhin bieten eine einfache Demontage und eine erneute Montage der Abdeckung eine effiziente Wartungsmöglichkeit von Batterieelementen, ohne das Batteriegehäuse großflächig zu beschädigen.

Insbesondere ist das dritte Befestigungselement oder das vierte Befestigungselement als eine durch die erste Gehäusewand, die zweite Gehäusewand, die dritte Gehäusewand bzw. die Abdeckung durchgehend verlaufende Öffnung ausgebildet. Weiterhin ist insbesondere das dritte Befestigungselement oder das vierte Befestigungselement als ein Lamellenelement an der ersten Gehäusewand, der zweiten Gehäusewand, der dritten Gehäusewand bzw. der Abdeckung ausgebildet.

Zweckmäßigerweise ist an einer Gehäusewand des Batteriegehäuses ein Kühlelement angeordnet. Weiterhin ist diese Gehäusewand derart konkav von dem Kühlelement abgewandt verlaufend ausgebildet, so dass eine Kontaktfläche zwischen der Gehäusewand und zumindest einer in dem Batteriegehäuse aufgenommenen Batterieeinheit sichergestellt wird. Insbesondere ist die konkave Krümmung der Gehäusewand ein teilweise reversibel verformbares Federelement. Eine Quellung der in dem Batteriegehäuse aufgenommenen Batterieeinheiten bewirkt eine Vergrößerung der Kontaktfläche zwischen einer Batterieeinheit und der Gehäusewand. Weiterhin wird dadurch das Federelement verformt und somit die konkave Krümmung reduziert. Somit sind insbesondere durch die Ausbildung der Gehäusewand mit einer konkaven Krümmung eine zuverlässige Energieübertragung und/oder eine Fixierung die Batterieeinheiten in ihrer Position sichergestellt.

Gemäß eines weiteren Gedankens der Erfindung ist in dem Batteriegehäuse ein zumindest teilweise reversibel verformbares Federelement angeordnet. Dieses dient dazu, den Batterieeinheiten eine gewünschte Ausdehnung zu ermöglichen. Das Federelement bestimmt größtenteils die Ausdehnungsgeschwindigkeit durch die auf eine Batterieeinheit ausgeübte Kraft. Weiterhin bewirken die Ausdehnungen der Batterieeinheiten größtenteils nur eine Verformung des Federelements und damit eine Reduzierung der mechanischen Belastung für die restlichen Gehäusewände. So ist es möglich, Wandstärken zu reduzieren und Material einzusparen.

In diesem Fall ist es vorteilhaft, dass zumindest eine Gehäusewand ein Anschlagelement ausbildet oder ein Anschlagelement in das Batteriegehäuse eingesetzt ist, wobei das Anschlagelement zu einer Begrenzung der Verformung des Federelements dient. So kann die Verformung des Federelements und damit die Ausdehnung der Batterieeinheiten auf ein gewünschtes Maß begrenzt werden.

Mit der erfindungsgemäßen Batterie ist es vorteilhaft möglich, Batterieeinheiten in dem Batteriegehäuse anzuordnen, so dass, insbesondere bei einer gewünschten Volumenausdehnung, die mechanische Stabilität des Batteriegehäuses sichergestellt ist.

Von Vorteil ist es weiterhin, wenn eine Gehäusewand des Batteriegehäuses zumindest eine Öffnung für die Anordnung eines Zellterminals aufweist. Dadurch kann ein Zellverbinder in dem Gehäuse so angeordnet sein, dass in dem Batteriegehäuse aufgenommene Batterieeinheiten elektrisch verbunden sind. Die Verbindung des Zellverbinders mit einer Batterieeinheit ist stoffschlüssig ausgebildet, insbesondere verschweißt oder gebondet hergestellt. Somit ist es möglich, mehrere Batterieeinheiten zum Schutz vor Umwelteinflüssen in dem Gehäuse anzuordnen und diese nur durch Zellterminals mit der Umgebung zu verbinden. Insbesondere weist die Abdeckung eine Öffnung für die Anordnung eines Zellterminals auf. Weiterhin kann die Abdeckung dazu dienen, Elemente der Batterie vor Berührungen zu schützen.

Beschrieben wird weiterhin ein Plattenelement aus Metall und/oder Kunststoff geeignet für die Herstellung eines Batteriegehäuses. Dieses Plattenelement weist zumindest eine Biegeunterstützungslinie auf, welche durch eine Vielzahl von durch das Plattenelement durchgehend verlaufenden Öffnungen oder durch Materialschwächungen ausgebildet ist. Weiterhin weist das Plattenelement ein erstes Plattensegment auf, welches ein erstes Befestigungselement ausbildet, und ein zweites Plattensegment, welches ein zweites Befestigungselement ausbildet. Dabei sind das erste Befestigungselement, das zweite Befestigungselement und die zumindest eine Biegeunterstützungslinie derart ausgebildet, dass zu einer reversiblen Verbindung des ersten Befestigungselements mit dem zweiten Befestigungselement das Plattenelement entlang der zumindest einen Biegeunterstützungslinie gebogen wird. Die Biegeunterstützungslinie ermöglicht eine gewünschte und exakte Biegung des Plattenelements auf vereinfachte Weise. Weiterhin ist es möglich, dass ein Biegeprozess durch die Biegeunterstützungslinie unterstützt wird.

Insbesondere ist das Plattenelement ein ebenes Bauteil. Somit ist dieses beispielsweise als Stanzteil herstellbar. Weiterhin kann das Bauteil auch als Laserschneidteil herstellbar sein. Insbesondere können die durch das Plattenelement durchgehend verlaufenden Öffnungen, welche die Biegeunterstützungslinie ausbilden können, durch Laserschneiden hergestellt werden. Insbesondere ist es weiterhin möglich, die Materialschwächungen, welche die Biegeunterstützungslinie ausbilden können, durch Stanzen herzustellen. Im Unterschied zu Tiefziehgehäusen oder Spritzgussgehäusen ist die Herstellung des Batteriegehäuses aus dem Plattenelement vergleichbar einfach, wirtschaftlich und schnell. Weiterhin ist das erste Befestigungselement als eine durch das erste Plattensegment durchgehend verlaufende Öffnung ausgebildet und das zweite Befestigungselement als Lamellenelement an dem zweiten Plattensegment ausgebildet. Das Plattenelement ist aus Metall und/oder Kunststoff hergestellt oder enthält Metall und/oder Kunststoff. Weiterhin weist das Plattenelement beispielsweise eine Dicke von 0,1 mm bis 5 mm auf, vorzugsweise eine Dicke von 0,5 mm bis 2 mm und insbesondere eine Dicke von 1 mm bis 1,5 mm.

Ferner betrifft die Erfindung ein Verfahren zur Herstellung einer erfindungsgemäßen Batterie aus einem solchen Plattenelement. Dabei werden zu einer reversiblen Verbindung des ersten Befestigungselements mit dem zweiten Befestigungselement das erste Plattensegment und das zweite Plattensegment entlang zumindest einer Biegeunterstützungslinie aufeinander zu gebogen. Somit kann durch ein exaktes Biegen des Plattenelements die Verbindung des ersten Befestigungselements und des zweiten Befestigungselement miteinander zuverlässig sichergestellt werden. Weiterhin erspart dieses Vorgehen einen zusätzlichen Fügeschritt und reduziert Herstellungskosten und/oder -zeit.

Weiterhin zweckmäßig ist, dass das Plattenelement ein drittes Befestigungselement ausbildet. Das Batteriegehäuse wird mit einer Abdeckung verbunden, welche ein viertes Befestigungselement ausbildet. Das Batteriegehäuse wird durch eine reversible Verbindung des vierten Befestigungselements mit dem dritten Befestigungselement reversibel mit der Abdeckung verbunden. Dies hat den Vorteil, dass die Abdeckung reversibel mit dem Batteriegehäuse verbindbar ist und Abdeckung ohne Schädigung demontiert werden kann.

Ausführungsbeispiele der Erfindung sind in den Zeichnungen dargestellt und in der nachfolgenden Beschreibung näher erläutert.

Es zeigen
Figur 1 eine Ausführungsform eines erfindungsgemäßen Batteriegehäuses in einer perspektivischen Darstellung,
Figur 2 eine Ausführungsform eines in das Batteriegehäuse einsetzbaren Federelements in einer perspektivischen Darstellung,
Figur 3 eine Ausführungsform eines erfindungsgemäßen Batteriegehäuses, welches eine Anschlagelement ausbildet, in einer perspektivischen Darstellung,
Figur 4 ein erfindungsgemäßes Batteriegehäuse, welches mit einer Abdeckung verschließbar ist, in einer perspektivischen Darstellung,
Figur 5 eine Ausführungsform eines Plattenelements, welches für die Herstellung eines erfindungsgemäßen Batteriegehäuses geeignet ist,
Figur 6 eine Ausführungsform einer erfindungsgemäßen Batterie mit Batteriegehäuse in einer perspektivischen Darstellung,
Figur 7 eine Ausführungsform einer erfindungsgemäßen Batterie mit Batteriegehäuse und mit einem an einer Gehäusewand angeordneten Kühlelement in einer Seitenansicht,
Figur 8 eine Abdeckung des Batteriegehäuse,
Figur 9 ein Verfahren zur Herstellung einer Verbindung von Batterieeinheiten und
Figur 10 eine Ausführungsform einer Gehäusewand eines erfindungsgemäßen Batteriegehäuses in einer Schnittansicht.

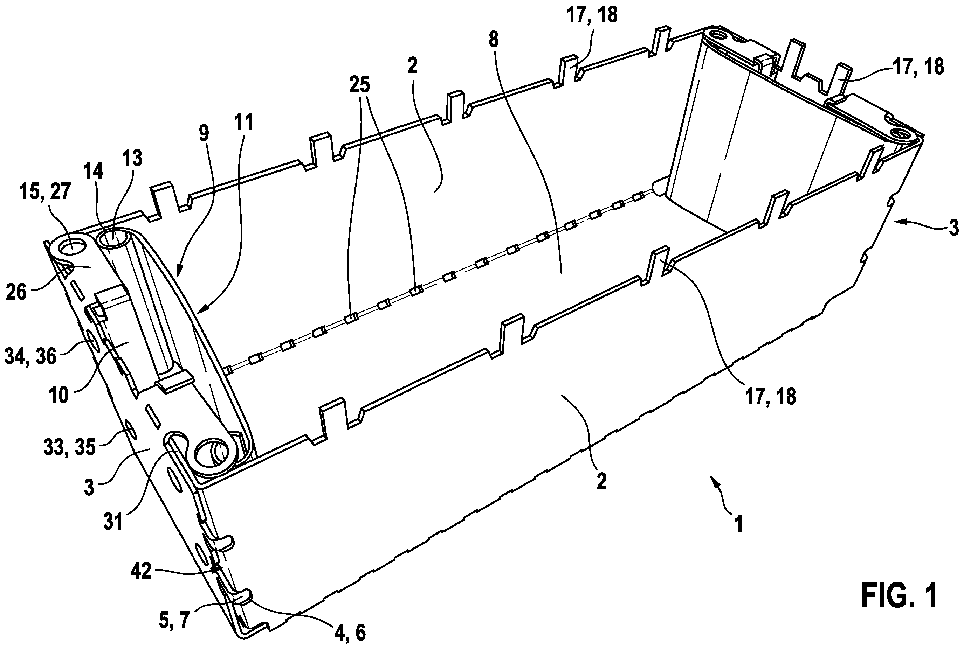

Die Figur 1 zeigt eine Ausführungsform eines erfindungsgemäßen Batteriegehäuses 1 in einer perspektivischen Darstellung.

Das Batteriegehäuse 1 dient zur Aufnahme von zumindest einer in der Figur 1 nicht gezeigten Batterieeinheit 46. Insbesondere ist die Batterieeinheit 46 eine Batteriezelle oder ein aus mehreren Batteriezellen zusammengesetztes Batteriemodul.

Das Batteriegehäuse 1 weist eine erste Gehäusewand 2 und eine zweite Gehäusewand 3 auf. Dabei bildet die erste Gehäusewand 2 ein erstes Befestigungselement 4 aus, welches, wie in Figur 1 gezeigt, als eine durch die erste Gehäusewand 2 durchgehend verlaufende erste Öffnung 6 ausgebildet ist. Weiterhin bildet die zweite Gehäusewand 3 ein zweites Befestigungselement 5 aus, welches, wie in Figur 1 gezeigt, als ein erstes Lamellenelement 7 ausgebildet ist.

Die erste Gehäusewand 2 ist relativ zu der zweiten Gehäusewand 3 aufgrund der Verbindung des ersten Befestigungselements 4 und des zweiten Befestigungselements 5 fixiert. Erfindungsgemäß sind das erste Befestigungselement 4 und das zweite Befestigungselement 5 reversibel miteinander verbunden.

Zu einer Herstellung des Batteriegehäuses 1 wird das erste Lamellenelement 7 so gebogen und/oder verformt, während die erste Gehäusewand 2 und die zweite Gehäusewand 3 relativ zu einander bewegt und/oder gedreht werden, so dass das erste Lamellenelement 7 in die erste Öffnung 6 eingeschoben werden kann und letztlich, wie es in Figur 1 zu erkennen ist, in der Art durch die erste Öffnung 6 verlaufend ausgebildet ist, dass die erste Gehäusewand 2 und die zweite Gehäusewand 3 relativ zueinander fixiert sind.

Für die Herstellung der eben beschriebenen reversiblen Verbindung ist die Verformung oder die Biegung des ersten Lamellenelements 7 nach dem Einschieben des ersten Lamellenelements 7 in die erste Öffnung 6, beispielsweise mit einer Zange, vorgesehen. Dies führt, insbesondere im Vergleich zu einem Schweiß- oder Lötverfahren, zu geringfügigen Materialschädigungen, so dass die Verbindung des ersten Befestigungselements 4, insbesondere der ersten Öffnung 6, mit dem zweiten Befestigungselement 5, insbesondere mit dem ersten Lamellenelement 7, ohne nennenswerte Beschädigung der ersten Gehäusewand 2 und der zweiten Gehäusewand 3 wieder trennbar ist. Weiterhin ist kein zusätzliches irreversibles Fügeverfahren, insbesondere ein Schweiß- oder Lötverfahren, nötig, wobei zu einer Abdichtung des Batteriegehäuses 1 die erste Gehäusewand 2 und die zweite Gehäusewand 3 entlang der in Figur 1 gezeigten ersten Verbindungskante 42 zusätzlich miteinander verschweißt werden können.

Wie aus Figur 1 ersichtlich ist, weist das Batteriegehäuse 1 eine dritte Gehäusewand 8 auf, welche vorzugsweise einteilig verbunden mit der ersten Gehäusewand 2 und der zweiten Gehäusewand 3 ausgebildet ist. Weiterhin möglich ist, dass die dritte Gehäusewand 8 lediglich mit der ersten Gehäusewand 2 oder der zweiten Gehäusewand 3 einteilig verbunden ausgebildet ist oder dass die dritte Gehäusewand 8 mit der ersten Gehäusewand 2 und/oder der zweiten Gehäusewand 3 irreversibel verbunden ist, insbesondere verschweißt ist.

Weiterhin ist in der Figur 1 die Anordnung eines Federelements 9 im Inneren des Batteriegehäuses 1 gezeigt, welches in das Batteriegehäuse 1 einsetzbar ist. Es ist zudem möglich, dass das Batteriegehäuse 1 das Federelement 9 ausbildet.

Das Federelement 9 bildet ein Federbefestigungselement 13 aus, welches insbesondere als zylindrischer Hohlkörper mit einer Befestigungswand 14 ausgebildet ist. Weiterhin bildet das Batteriegehäuse 1 ein Federaufnahmeelement 15 aus, welches insbesondere als eine durch eine Stützwand 26 durchgehend verlaufende Öffnung 27 ausgebildet ist. Das Federelement 9 ist derart in das Innere des Batteriegehäuses 1 einsetzbar, dass das Federbefestigungselement 13 und die Öffnung 27 des Federaufnahmeelements 15 fluchtend zueinander angeordnet sind, wobei insbesondere ein in der Öffnung 27 und in dem Inneren des zylindrischen Hohlkörpers angeordneter, nicht dargestellter Stift oder Bolzen für eine Verbindung sorgt.

Wie in Figur 1 gezeigt, bildet das Federelement 9 eine Kraftaufnahmewand 11 aus, welche zumindest teilweise reversibel verformbar ist. Das Federelement 9 mit der Kraftaufnahmewand 11 ist im Vergleich zu den restlichen Gehäusewänden 2,3,8, welche eine Kontaktfläche mit der nicht dargestellten Batterieeinheit 46 ausbilden, das Element mit der geringsten Verformungsresistenz. Eine Volumenausdehnung von in dem Batteriegehäuse 1 aufgenommenen Batterieeinheiten 46 durch Quellung im Betrieb führt somit größtenteils zu einer Verformung des Federelements 9. Dadurch reduziert sich die mechanische Belastung für die restlichen Gehäusewände 2,3,8. Die Ausbildung des Federelements 9, insbesondere der Kraftaufnahmewand 11, definiert das Ausdehnungsvermögen der Batterieeinheiten 46.

Zudem bildet das Batteriegehäuse 1 ein Anschlagelement 10 aus. Weiterhin möglich ist, dass ein Anschlagelement 10 in das Batteriegehäuse 1 einsetzbar ist.

Das Anschlagelement 10 und das Federelement 9 sind so zueinander angeordnet, dass das Anschlagelement 10 die Verformung der Kraftaufnahmewand 11 begrenzt. Weiterhin bestimmt der Abstand zwischen der Kraftaufnahmewand 11 und dem Anschlagelement 10 und/oder die räumliche Ausgestaltung des Anschlagelements 10 das Ausmaß der tolerierten Ausdehnung der Batterieeinheiten 46.

Weiterhin weist das in Figur 1 gezeigte Batteriegehäuse 1 beispielsweise zumindest eine vierte Gehäusewand 31 auf, welche insbesondere einteilig verbunden mit der ersten Gehäusewand 2 ausgebildet ist. Die zumindest eine vierte Gehäusewand 31 ist zudem flächig parallel an der zweiten Gehäusewand 3 angeordnet. Insbesondere sind zwei vierte Gehäusewände 31 an der zweiten Gehäusewand 3 flächig parallel angeordnet.

Die zweite Gehäusewand 3 bildet eine dritte Öffnung 33 und eine vierte Öffnung 34 aus, welche durch die zweite Gehäusewand 3 durchgehend verlaufend ausgebildet sind. Weiterhin bildet die vierte Gehäusewand 31 eine fünfte Öffnung 35 und eine sechste Öffnung 36 aus, welche durch die vierte Gehäusewand 31 durchgehend verlaufend ausgebildet sind. Die vierte Gehäusewand 31 ist so an der zweiten Gehäusewand 3 angeordnet, dass die dritte Öffnung 33 fluchtend zu der fünften Öffnung 35 positioniert ist, wobei insbesondere ein nicht dargestellter Stift oder ein Bolzen für eine Verbindung sorgt. Weiterhin ist vierte Gehäusewand 31 so an der zweiten Gehäusewand 3 angeordnet, dass die vierte Öffnung 34 fluchtend zu der sechsten Öffnung 36 positioniert ist, wobei insbesondere ein nicht dargestellter Stift oder ein Bolzen für eine Verbindung sorgt.

Figur zeigt 1, dass die erste Gehäusewand 2 ein drittes Befestigungselement 17 ausbildet, welches als ein zweites Lamellenelement 18 ausgebildet ist.

Figur zeigt 1, dass die zweite Gehäusewand 3 ein drittes Befestigungselement 17 ausbildet, welches als ein zweites Lamellenelement 18 ausgebildet ist.

Insbesondere ist es möglich, dass die dritte Gehäusewand 8 ein drittes Befestigungselement 17 ausbildet, welches als ein zweites Lamellenelement 18 ausgebildet sein kann.

Das dritte Befestigungselement 17 dient der reversiblen Verbindung des Batteriegehäuses 1 mit einer in Figur 1 nicht dargestellten Abdeckung 16.

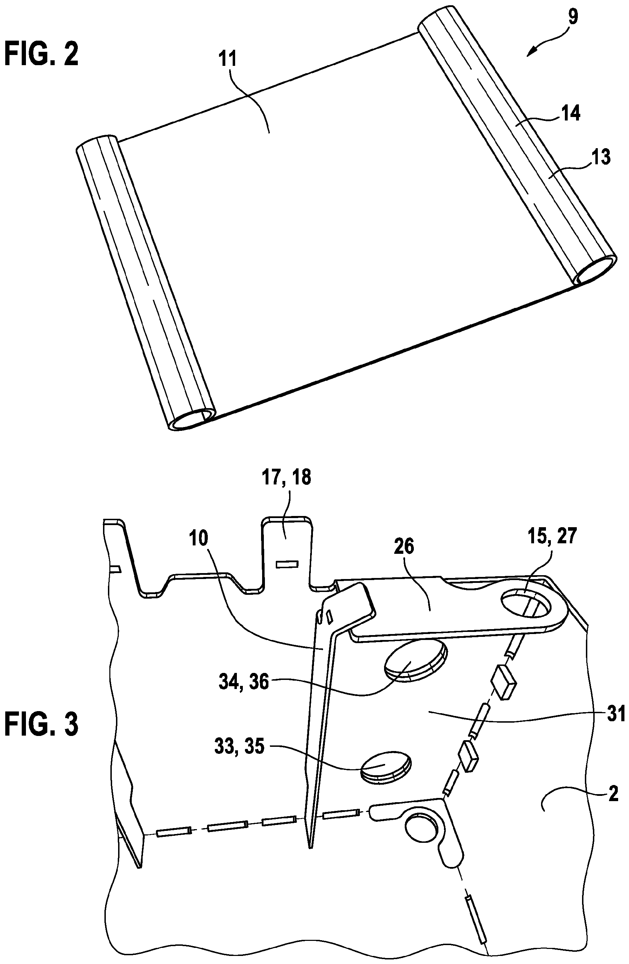

Die Figur 2 zeigt eine Ausführungsform eines Federelements 9, welches in das Batteriegehäuse 1 einsetzbar ist.

Das Federelement 9 bildet zumindest ein Federbefestigungselement 13 aus, vorzugsweise zwei Federbefestigungselemente 13, welches wie in Figur 2 gezeigt, als zylindrischer Hohlkörper mit einer Befestigungswand 14 ausgebildet ist. Weiterhin weist das Federelement 9 eine Kraftaufnahmewand 11 auf, wobei das zumindest eine Federbefestigungselement 13 und die Kraftaufnahmewand 11 insbesondere einteilig verbunden ausgebildet sind.

Das Federelement 9 wird vorteilhaft aus einem Plattenelement durch ein geeignetes Biegeverfahren hergestellt.

Die Figur 3 zeigt eine Ausführungsform eines Batteriegehäuses 1, welches ein Anschlagelement 10 ausbildet. Alternativ ist es auch möglich, dass ein Anschlagelement 10 in das Batteriegehäuse 1 analog der Ausführungsform gemäß Figur 1 einsetzbar ist. Aus Figur 3 ist ersichtlich, dass das Anschlagelement 10 und die Stützwand 26 zu einer Erhöhung der mechanischen Stabilität des Anschlagelements 10 eine Verbindung ausbilden, insbesondere kann diese Verbindung geschweißt sein.

Weiterhin ist in Figur 3 gezeigt, dass die dritte Öffnung 33 und die fünfte Öffnung 35 fluchtend zueinander angeordnet sind. Zudem zeigt Figur 3, dass die vierte Öffnung 34 und die sechste Öffnung 36 fluchtend zueinander angeordnet sind.

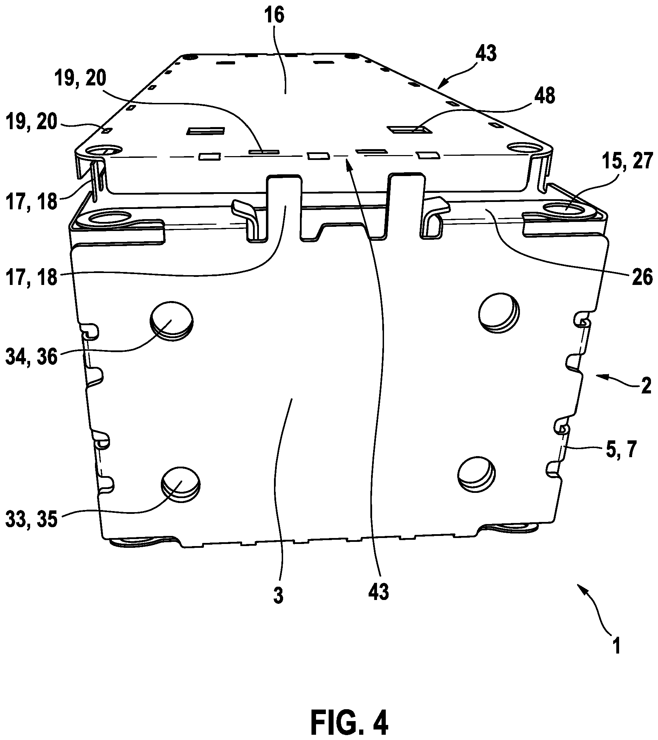

Die Figur 4 zeigt ein erfindungsgemäßes Batteriegehäuse 1, welches mit einer Abdeckung 16 verschließbar ist.

Die Abdeckung 16 bildet ein viertes Befestigungselement 19 aus, welches insbesondere, wie in Figur 4 gezeigt, als eine durch die Abdeckung 16 durchgehend verlaufende zweite Öffnung 20 ausgebildet ist.

Die Abdeckung 16 ist relativ zu der ersten Gehäusewand 2, der zweiten Gehäusewand 3 oder der dritten Gehäusewand 8 aufgrund der Verbindung des dritten Befestigungselements 17 mit dem vierten Befestigungselement 19 fixiert. Erfindungsgemäß sind das dritte Befestigungselement 17 und das vierte Befestigungselement 19 reversibel miteinander verbunden.

Zu einer Verbindung der ersten Gehäusewand 2 oder der zweiten Gehäusewand 3 mit der Abdeckung 16 wird das zweite Lamellenelement 18 so gebogen und/oder verformt, während die Abdeckung 16 und die erste Gehäusewand 2 bzw. die zweite Gehäusewand 3 relativ zu einander bewegt und/oder gedreht werden, so dass das zweite Lamellenelement 18 in die zweite Öffnung 20 eingeschoben werden kann und letztlich in der Art durch die zweite Öffnung 20 verlaufend ausgebildet ist, dass die Abdeckung 16 und die erste Gehäusewand 2, die zweite Gehäusewand 3 bzw. die dritte Gehäusewand 8 relativ zueinander fixiert sind.

Für die Herstellung der eben beschriebenen reversiblen Verbindung ist somit die Verformung oder die Biegung des zweiten Lamellenelements 18 notwendig. Dieses führt, insbesondere im Vergleich zu einem Schweiß- oder Lötverfahren, zu geringfügigen Materialschädigungen, so dass die Verbindung des dritten Befestigungselements 17, insbesondere des zweiten Lamellenelements 18, und des vierten Befestigungselements 19, insbesondere der zweiten Öffnung 20, ohne nennenswerte Beschädigung der Abdeckung 16 trennbar ist.

Weiterhin ist kein zusätzliches irreversibles Fügeverfahren, insbesondere ein Schweiß- oder Lötverfahren, nötig, wobei zu einer Abdichtung die erste Gehäusewand 2 oder die zweite Gehäusewand 3 entlang einer in Figur 4 gezeigten zweiten Verbindungskante 43 mit der Abdeckung verschweißt werden können.

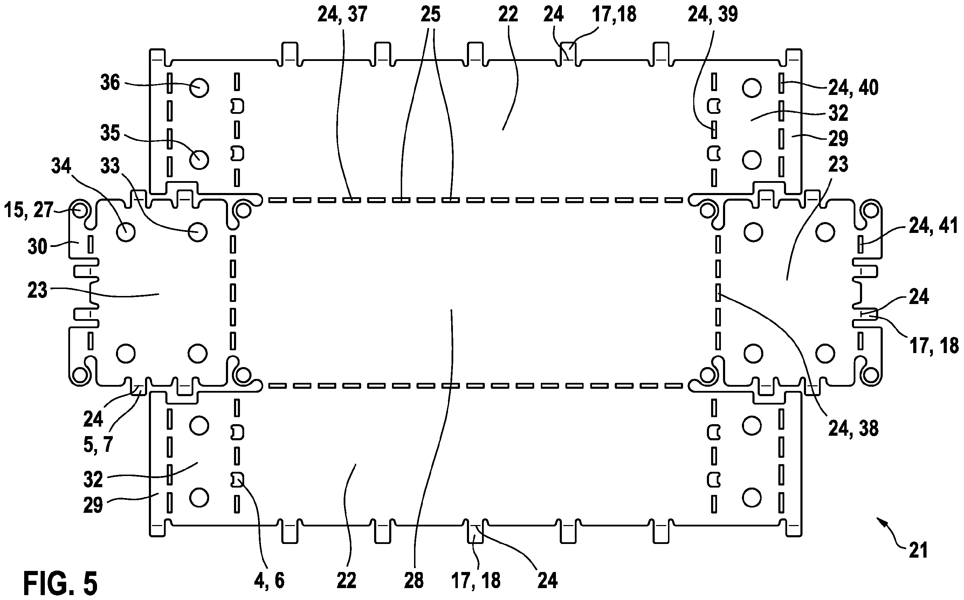

In Figur 5 ist eine Ausführungsform eines Plattenelements 21 gezeigt, welches für die Herstellung eines erfindungsgemäßen Batteriegehäuses 1 geeignet ist.

Das Plattenelement 21 weist ein erstes Plattensegment 22 und ein zweites Plattensegment 23 auf, wobei das erste Plattensegment 22 nach der Herstellung des Batteriegehäuses 1 die erste Gehäusewand 2 ausbildet und das zweite Plattensegment 23 die zweite Gehäusewand 3.

Das erste Plattensegment 22 bildet mindestens ein erstes Befestigungselement 4 aus, welches, wie aus Figur 5 ersichtlich ist, als eine durch das erste Plattensegment 22 durchgehend verlaufende erste Öffnung 6 ausgebildet ist. Weiterhin bildet das zweite Plattensegment 23 mindestens ein zweites Befestigungselement 5 aus, welches, wie aus Figur 5 zu erkennen ist, als ein erstes Lamellenelement 7 ausgebildet ist.

Wie aus der Figur 5 ersichtlich ist, weist das Plattenelement 21 ein drittes Plattensegment 28 auf, welches nach der Herstellung des Batteriegehäuses 1 die dritte Gehäusewand 8 ausbildet.

Das Plattenelement 21 bildet weiterhin mindestens ein drittes Befestigungselement 17 aus, welches insbesondere, wie aus Figur 5 zu erkennen ist, als ein zweites Lamellenelement 18 ausgebildet ist. Insbesondere bilden das erste Plattensegment 22 und/oder das zweite Plattensegment 23 ein drittes Befestigungselement 17 aus.

Weiterhin bildet das Plattenelement 21 ein viertes Plattensegment 32 aus, wobei das vierte Plattensegment 32 nach der Herstellung des Batteriegehäuses 1 die vierte Gehäusewand 31 ausbildet.

Aus der Figur 5 ist zu erkennen, dass das Plattenelement 21 ein Anschlagelementsegment 29 aufweist, welches bei dem fertig gestellten Batteriegehäuse 1 das Anschlagelement 10 ausbildet.

Weiterhin zeigt die Figur 5, dass das Plattenelement 21 ein Stützwandsegment 30 ausbildet, welches bei dem fertig gestellten Batteriegehäuse 1 die Stützwand 26 ausbildet. Das Stützwandsegment 30 bildet ein Federaufnahmeelement 15 aus, welches insbesondere als eine durch das Stützwandsegment 30 durchgehend verlaufende Öffnung 27 ausgebildet ist.

Das zweite Plattensegment 23 bildet mindestens eine dritte Öffnung 33 und mindestens eine vierte Öffnung 34 aus, welche durch das zweite Plattensegment 23 durchgehend verlaufend ausgebildet sind. Weiterhin bildet das vierte Plattensegment 32 mindestens eine fünfte Öffnung 35 und mindestens eine sechste Öffnung 36 aus, welche durch das vierte Plattensegment 32 durchgehend verlaufend ausgebildet sind.

Erfindungsgemäß weist das Plattenelement 21 zumindest eine Biegeunterstützungslinie 24 auf. Die zumindest eine Biegeunterstützungslinie 24 ist, wie aus Figur 1 zu erkennen ist, durch eine Vielzahl von durch das Plattenelement 21 durchgehend verlaufenden Öffnungen 25 und/oder definierte Materialschwächungen des Plattenelements 21 ausgebildet.

Wie aus Figur 5 zu erkennen ist, weist das Plattenelement 21 mindestens
- eine erste Biegeunterstützungslinie 37, welche das erste Plattensegment 22 und das dritte Plattensegment 28 räumlich voneinander trennt,
- eine zweite Biegeunterstützungslinie 38, welche das zweite Plattensegment 23 und das dritte Plattensegment 28 räumlich voneinander trennt,
- eine dritte Biegeunterstützungslinie 39, welche das erste Plattensegment 22 und das vierte Plattensegment 32 räumlich voneinander trennt,
- eine vierte Biegeunterstützungslinie 40, welche das vierte Plattensegment 32 und das Anschlagelementsegment 29 räumlich voneinander trennt und
- eine fünfte Biegeunterstützungslinie 41, welche das zweite Plattensegment 23 und die Stützwandsegment 30 räumlich voneinander trennt,
auf.

Für die Herstellung eines Batteriegehäuses 1 aus dem Plattenelement 21 aus Figur 5 wird das Plattenelement 21 entlang der ersten Biegeunterstützungslinie 37, der zweiten Biegeunterstützungslinie 38, der dritten Biegeunterstützungslinie 39, der vierten Biegeunterstützungslinie 40 und der fünften Biegeunterstützungslinie 41 gebogen. Insbesondere vorteilhaft ist es, zuerst entlang der vierten Biegeunterstützungslinie 40, dann entlang der dritten Biegeunterstützungslinie 39, dann entlang der zweiten Biegeunterstützungslinie 38 und/oder entlang der ersten Biegeunterstützungslinie 37 und dann entlang der fünften Biegeunterstützungslinie 41 zu biegen, vorzugsweise jeweils mit einem Winkel von 90°.

Weiterhin ist es möglich, dass, wie in Figur 5 gezeigt, das erste Lamellenelement 7 und/oder das zweite Lamellenelement 18 eine Biegeunterstützungslinie 24 aufweisen. Dadurch soll die Herstellung der reversiblen Verbindung erleichtert werden.

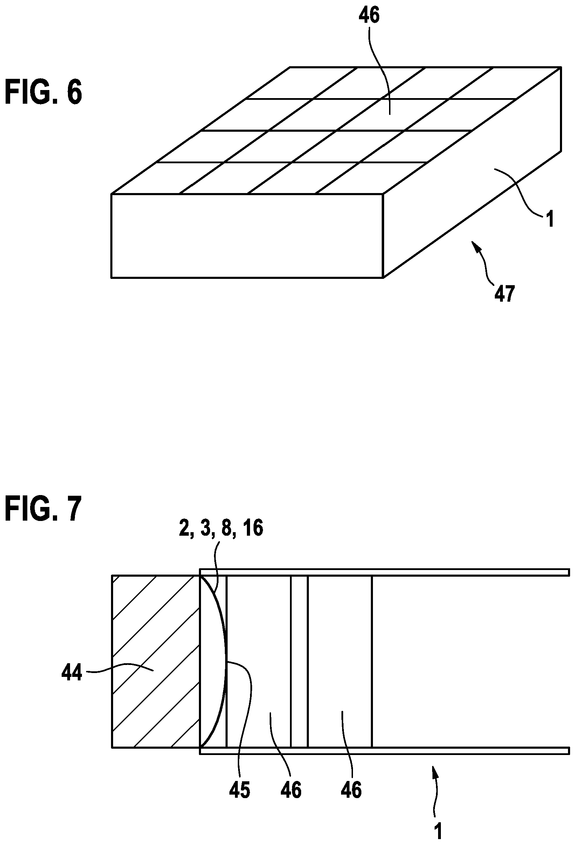

Figur 6 zeigt eine erfindungsgemäße Batterie 47 mit dem Batteriegehäuse 1, wobei in dem Batteriegehäuse 1 zumindest eine Batterieeinheit 46 oder eine Vielzahl an Batterieeinheiten 46 angeordnet ist. Insbesondere ist die Batterieeinheit 46 eine Batteriezelle oder ein aus mehreren Batteriezellen zusammengesetztes Batteriemodul. Weiterhin ist das Batteriegehäuse 1 vorzugsweise mit einer nicht dargestellten Abdeckung 16 verschlossen.

Figur 7 zeigt die Anordnung eines Kühlelements 44 an einer Gehäusewand des Batteriegehäuses 1, insbesondere ist das Kühlelement 44 an der ersten Gehäusewand 2, an der zweiten Gehäusewand 3, an der dritten Gehäusewand 8 oder an der Abdeckung 16 angeordnet.

Weiterhin zeigt Figur 7, dass die in dem Batteriegehäuse 1 aufgenommenen Batterieeinheiten 46 und mindestens eine der Gehäusewände 2,3,8,16 zumindest eine Kontaktfläche 45 ausbilden. Die mindestens eine Gehäusewand 2,3,8,16 ist derart konkav von dem Kühlelement 44 abgewandt verlaufend ausgebildet, dass zumindest eine Kontaktfläche 45 zwischen der Gehäusewand 2,3,8,16 und zumindest einer Batterieeinheit 46 sichergestellt ist.

Bei einer Quellung der Batterieeinheit 46 reduziert sich die konkave Wölbung der mindestens einen Gehäusewand 2,3,8,16 und die mindestens eine Gehäusewand 2,3,8,16 bekommt eine federnde Wirkung, welche zu einer Sicherstellung der Energieübertragung und einer Fixierung der Position der Batterieeinheiten 46 dient.

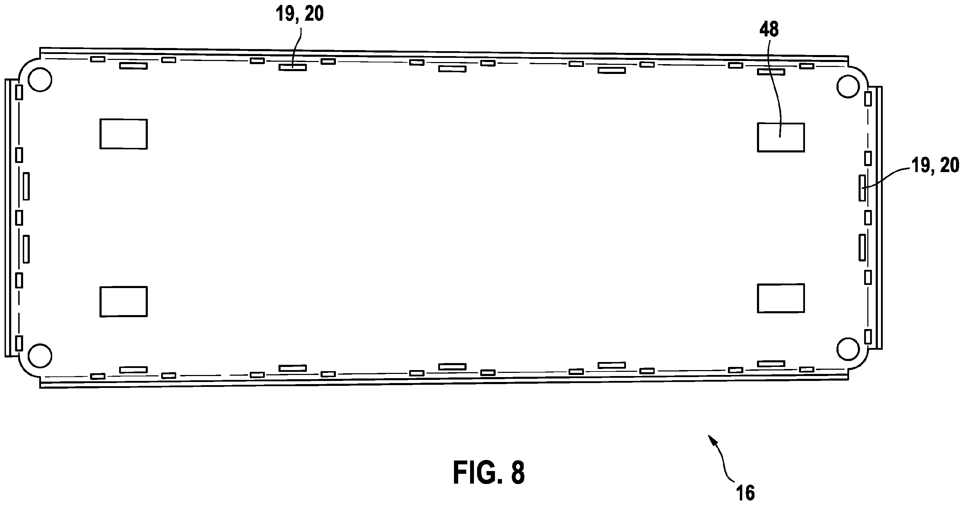

Die Figur 8 zeigt eine Abdeckung 16 eines Batteriegehäuse 1.

Wie aus Figur 8 ersichtlich ist, weist die Abdeckung 16 mindestens ein viertes Befestigungselement 19 auf, welches insbesondere als eine durch die Abdeckung 16 durchgehend verlaufende Öffnung 20 ausgebildet ist.

Die Abdeckung 16 weist weiterhin zumindest eine Öffnung 48, welche durch die Abdeckung 16 durchgehend verlaufend ausgebildet ist, für die Anordnung eines nicht gezeigten Zellterminals auf.

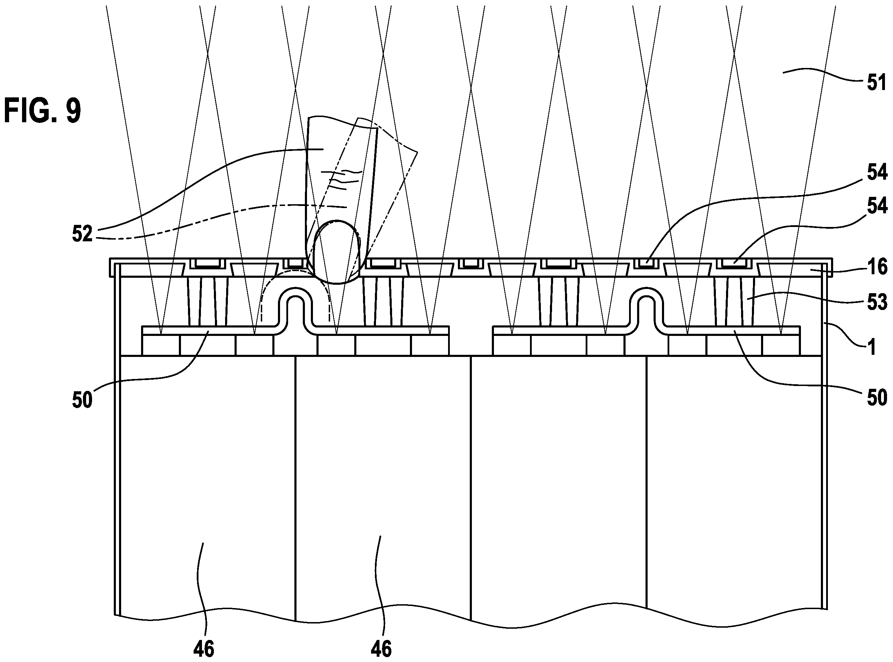

Figur 9 zeigt eine bevorzugte Methode zur Herstellung einer elektrischen Verbindung zwischen zwei in dem Inneren des Batteriegehäuses 1 angeordneten Batterieeinheiten 46. Dazu dient ein Zellverbinder 50. Ein Schweißverfahren stellt die elektrische Verbindung einer Batterieeinheiten 46 und dem Zellverbinder 50 her. Vorzugsweise weist das Batteriegehäuse 1 eine Abdeckung 16 auf, wobei das Batteriegehäuse 1 mit der Abdeckung 16 insbesondere vor dem Verschweißen der Zellverbinder 50 und den Batterieeinheiten 46, vorzugsweise reversibel, verbunden ist. Weiterhin ist es möglich, die Zellverbindung stoffschlüssig, insbesondere über eine Bondverbindung, herzustellen.

Bevorzugt ist, wie in Figur 9 gezeigt, zwischen dem Zellverbinder 50 und der Abdeckung 16 ein Abstandselement 53 angeordnet. Insbesondere ist das Abstandselement 53 als Kunststoffteil ausgebildet. Das Abstandselement 53 dient dazu, dass bei einer Verformung der Abdeckung 16 diese den Zellverbinder 50 nicht berühren kann. Insbesondere kann dadurch verhindert werden, dass ein Anwender, in Form des in Figur 9 gezeigten Fingers 52, die Abdeckung 16 in der Art verformen kann, dass die Abdeckung 16 den Zellverbinder 50 berührt. Weiterhin ist es möglich, dass der Abstandhalter 16 zu einer Fixierung des Zellverbinders 50 dient.

Wie aus Figur 9 zu erkennen ist, nutzt das Schweißverfahren zumindest einen Laserstrahl 51. Weiterhin weist die Abdeckung 16 zumindest ein Markierungselement 54 auf, wobei das zumindest eine Markierungselement 54 dazu, dient die richtige Position des zumindest einen Laserstrahls 51 zu bestimmen. Wie Figur 9 zeigt, bestimmt das zumindest eine Markierungselement 54 einen Bereich der Abdeckung 16, auf welchen kein Laserstrahl 51 auftreffen soll.

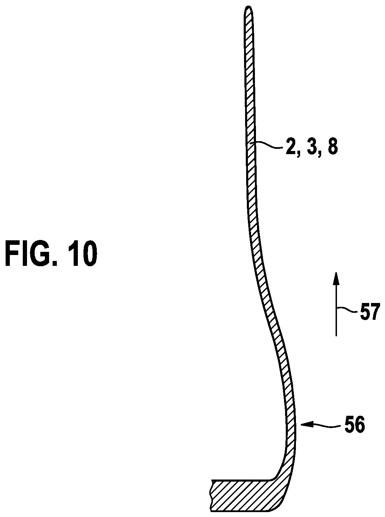

Die Figur 10 zeigt eine Ausführungsform einer Gehäusewand 2, 3, 8 eines erfindungsgemäßen Batteriegehäuses 1 in einer Schnittansicht. Eine Längsrichtung 57 der Gehäusewand 2, 3, 8 ist bei der Zeichnung in Figur 10 senkrecht zur Zeichenebene. Dabei weist die Gehäusewand 2, 3, 8 einen Vorsprung 56 auf, welcher insbesondere abgerundet ausgebildet ist. Der Vorsprung 56 erstreckt sich vorteilhaft in der Längsrichtung 57 über die gesamte Gehäusewand 2, 3, 8. Der Vorsprung 56 dient dazu, zwei benachbarte Batteriegehäuse 1 oder das Batteriegehäuse 1 und eine Befestigungswand des Batteriepacks miteinander zu befestigen.

Die erfindungsgemäßen Batterien sind im mobilen Einsatz, insbesondere in Elektrofahrzeugen und E-Bikes, verwendbar und für die Anwendung im stationären Betrieb.

## Patentansprüche

1. Batterie mit einem Batteriegehäuse (1) ausgebildet zur Aufnahme von zumindest einer Batterieeinheit (46), wobei
das Batteriegehäuse (1) aus einem Plattenelement aus Metall und/oder Kunststoff hergestellt ist, wobei
das Plattenelement (21) als ebenes Bauteil bereitgestellt wird und
das Plattenelement (21) zumindest eine Biegeunterstützungslinie (24) aufweist, welche
durch eine Vielzahl von durch das Plattenelement (21) durchgehend verlaufenden Öffnungen (25) oder durch Materialschwächungen ausgebildet ist, und
das Plattenelement (21) ein erstes Plattensegment (22) aufweist, welches ein erstes Befestigungselement (4) ausbildet, wobei
das erste Befestigungselement (4) als eine durch das erste Plattensegment (22) durchgehend hindurch verlaufende Öffnung (6) ausgebildet ist, und
das Plattenelement (12) ein zweites Plattensegment (23) aufweist, welches ein zweites Befestigungselement (5) ausbildet, wobei
das zweite Befestigungselement (5) als ein Lamellenelement (7) ausgebildet ist, wobei
zu einer reversiblen Verbindung des ersten Befestigungselements (4) mit dem zweiten Befestigungselement (5) das Plattenelement (21) entlang der zumindest einen Biegeunterstützungslinie (24) gebogen wird und das Lamellenelement (7) zu einer Anordnung des Lamellenelement (7) in der Öffnung (6) gebogen und/oder verformt wird, so dass das erste Plattensegment (22) eine erste Gehäusewand (2) ausbildet und
das zweite Plattensegment (23) eine zweite Gehäusewand ausbildet, wobei das erste Befestigungselement (4) und das zweite Befestigungselement (5) zu einer Fixierung der ersten Gehäusewand (2) relativ zu der zweiten Gehäusewand (3) reversibel miteinander verbunden sind.

2. Batterie nach dem vorherigen Anspruch 1
**dadurch gekennzeichnet, dass**
das Plattenelement (21) zumindest ein drittes Plattensegment (28) aufweist, wobei das dritte Plattensegment (28) mit dem ersten Plattensegment (22) und/oder mit dem zweiten Plattensegment (23) einteilig verbunden ausgebildet oder irreversibel verbunden ist und
das erste Plattensegment (22) oder das zweite Plattensegment (23) oder das dritte Plattensegment (28), welches eine dritte Gehäusewand (8) ausbildet, ein drittes Befestigungselement (17) ausbildet und
das Batteriegehäuse (1) eine Abdeckung (16), welche ein viertes Befestigungselement (19) ausbildet, aufweist, wobei
zu einer Fixierung der Abdeckung (16) relativ zu der ersten (2), zweiten (3) bzw. dritten Gehäusewand (8) das vierte Befestigungselement (19) reversibel mit einem dritten Befestigungselement (17) verbunden ist.

3. Batterie nach dem vorhergehenden Anspruch 1 oder 2,
**dadurch gekennzeichnet, dass**
an einer Gehäusewand (2,3,8,16) des Batteriegehäuses (1) ein Kühlelement (44) angeordnet ist und
die Gehäusewand (2,3,8,16) derart konkav von dem Kühlelement (44) abgewandt verlaufend ausgebildet ist, dass
eine Kontaktfläche (45) zwischen der Gehäusewand (2,3,8,16) und zumindest einer in dem Batteriegehäuse (1) aufgenommenen Batterieeinheit (46) sichergestellt wird.

4. Batterie nach mindestens einem der vorhergehenden Ansprüche 1 bis3,
**dadurch gekennzeichnet, dass**
in dem Batteriegehäuse (1) ein zumindest teilweise reversibel verformbares Federelement (9) angeordnet ist.

5. Batterie nach Anspruch 4,
**dadurch gekennzeichnet, dass**
zumindest eine Gehäusewand (2,3,8,16) ein Anschlagelement (10) ausbildet oder ein Anschlagelement (10) in das Batteriegehäuse (1) eingesetzt ist, wobei das Anschlagelement (10) zu einer Begrenzung der Verformung des Federelements (9) dient.

6. Batterie nach Anspruch 5
**dadurch gekennzeichnet, dass**
eine Gehäusewand (2,3,8,16) des Batteriegehäuses (1) zumindest eine Öffnung (48) für die Anordnung eines Zellterminals (49) aufweist und
in dem Batteriegehäuse (1) ein Zellverbinder (50) so angeordnet ist, dass in dem Batteriegehäuse aufgenommene Batterieeinheiten (46) elektrisch verbunden sind, wobei
die Verbindung des Zellverbinders (50) mit einer Batterieeinheit (46) stoffschlüssig, insbesondere verschweißt oder gebondet, hergestellt ist.

7. Verfahren zur Herstellung einer Batterie nach einem der Ansprüche 1 bis 6
**dadurch gekennzeichnet, dass**
ein Plattenelement aus Metall und/oder Kunststoff bereitgestellt wird, wobei das Plattenelement (21) als ebenes Bauteil ausgebildet ist wird und
das Plattenelement (21) zumindest eine Biegeunterstützungslinie (24) aufweist, welche
durch eine Vielzahl von durch das Plattenelement (21) durchgehend verlaufenden Öffnungen (25) oder durch Materialschwächungen ausgebildet ist, und
das Plattenelement (21) ein erstes Plattensegment (22) aufweist, welches ein erstes Befestigungselement (4) ausbildet, wobei
das erste Befestigungselement (4) als eine durch das erste Plattensegment (22) durchgehend hindurch verlaufende Öffnung (6) ausgebildet ist, und
das Plattenelement (12) ein zweites Plattensegment (23) aufweist, welches ein zweites Befestigungselement (5) ausbildet, wobei
das zweite Befestigungselement (5) als ein Lamellenelement (7) ausgebildet ist, wobei
zu einer reversiblen Verbindung des ersten Befestigungselements (4) mit dem zweiten Befestigungselement (5) das Plattenelement (21) entlang der zumindest einen Biegeunterstützungslinie (24) gebogen wird und
das Lamellenelement (7) zu einer Anordnung des Lamellenelement (7) in der Öffnung (6) gebogen und/oder verformt wird, wobei, so dass
das erste Plattensegment (22) eine erste Gehäusewand (2) ausbildet und
das zweite Plattensegment (23) eine zweite Gehäusewand ausgebildet, wobei das erste Befestigungselement (4) und das zweite Befestigungselement (5) zu einer Fixierung der ersten Gehäusewand (2) relativ zu der zweiten Gehäusewand (3) reversibel miteinander verbunden sind.

8. Verfahren zur Herstellung eines Batteriegehäuses nach Anspruch 7,
wobei das Plattenelement (21) ein drittes Befestigungselement (17) ausbildet und das Batteriegehäuse (1) mit einer Abdeckung (16) verbunden wird, welche
ein viertes Befestigungselement (19) ausbildet,
**dadurch gekennzeichnet, dass** das Batteriegehäuse (1) durch eine reversible Verbindung des vierten Befestigungselements (19) mit dem dritten Befestigungselement (17) reversibel mit einer Abdeckung (16) verbunden wird.

## Claims

1. Battery having a battery housing (1) designed to receive at least one battery unit (46), wherein the battery housing (1) is produced from a plate element made of metal and/or plastic, wherein the plate element (21) is provided as a planar component, and the plate element (21) has at least one bending-supporting line (24) which is formed by a plurality of openings (25) extending continuously through the plate element (21) or by material weakenings, and the plate element (21) has a first plate segment (22) which forms a first fastening element (4), wherein the first fastening element (4) takes the form of an opening (6) which extends continuously through the first plate segment (22), and the plate element (12) has a second plate segment (23) which forms a second fastening element (5), wherein the second fastening element (5) takes the form of a lamella element (7), wherein, for reversible connection of the first fastening element (4) to the second fastening element (5), the plate element (21) is bent along the at least one bending-supporting line (24), and the lamella element (7) is bent and/or deformed for arrangement of the lamella element (7) in the opening (6), with the result that the first plate segment (22) forms a first housing wall (2), and the second plate segment (23) forms a second housing wall, wherein, for fixing the first housing wall (2) relative to the second housing wall (3), the first fastening element (4) and the second fastening element (5) are reversibly connected to one another.

2. Battery according to the preceding Claim 1, **characterized in that**
the plate element (21) has at least one third plate segment (28), wherein the third plate segment (28) is designed to be connected in one piece, or is irreversibly connected, to the first plate segment (22) and/or to the second plate segment (23), and the first plate segment (22) or the second plate segment (23) or the third plate segment (28), which forms a third housing wall (8), forms a third fastening element (17), and the battery housing (1) has a cover (16) which forms a fourth fastening element (19), wherein, for fixing the cover (16) relative to the first (2), second (3) or third housing wall (8), the fourth fastening element (19) is reversibly connected to a third fastening element (17).

3. Battery according to the preceding Claim 1 or 2, **characterized in that**
a cooling element (44) is arranged on a housing wall (2, 3, 8, 16) of the battery housing (1), and the housing wall (2, 3, 8, 16) is designed to extend concavely away from the cooling element (44) in such a way that a contact surface (45) is ensured between the housing wall (2, 3, 8, 16) and at least one battery unit (46) received in the battery housing (1).

4. Battery according to at least one of the preceding Claims 1 to 3,
**characterized in that**
an at least partially reversibly deformable spring element (9) is arranged in the battery housing (1) .

5. Battery according to Claim 4,
**characterized in that**
at least one housing wall (2, 3, 8, 16) forms a stop element (10), or a stop element (10) is inserted into the battery housing (1), wherein the stop element (10) serves for limiting the deformation of the spring element (9).

6. Battery according to Claim 5,
**characterized in that**
a housing wall (2, 3, 8, 16) of the battery housing (1) has at least one opening (48) for the arrangement of a cell terminal (49), and a cell connector (50) is arranged in the battery housing (1) in such a way that battery units (46) received in the battery housing are electrically connected, wherein the connection of the cell connector (50) to a battery unit (46) is produced in an integrally bonded manner, in particular by welding or bonding.

7. Method for producing a battery according to one of Claims 1 to 6,
**characterized in that**
a plate element made of metal and/or plastic is provided, wherein the plate element (21) is formed as a planar component, and the plate element (21) has at least one bending-supporting line (24) which is formed by a plurality of openings (25) which extend continuously through the plate element (21) or by material weakenings, and the plate element (21) has a first plate segment (22) which forms a first fastening element (4), wherein the first fastening element (4) takes the form of an opening (6) which extends continuously through the first plate segment (22), and the plate element (12) has a second plate segment (23) which forms a second fastening element (5), wherein the second fastening element (5) takes the form of a lamella element (7), wherein, for reversible connection of the first fastening element (4) to the second fastening element (5), the plate element (21) is bent along the at least one bending-supporting line (24), and the lamella element (7) is bent and/or deformed for arrangement of the lamella element (7) in the opening (6), wherein, such that the first plate segment (22) forms a first housing wall (2), and the second plate segment (23) formed a second housing wall, wherein, for fixing the first housing wall (2) relative to the second housing wall (3), the first fastening element (4) and the second fastening element (5) are reversibly connected to one another.

8. Method for producing a battery housing according to Claim 7, wherein the plate element (21) forms a third fastening element (17), and the battery housing (1) is connected to a cover (16) which forms a fourth fastening element (19), **characterized in that** the battery housing (1) is reversibly connected to a cover (16) by a reversibly connection of the fourth fastening element (19) to the third fastening element (17).

## Revendications

1. Batterie comprenant un boîtier de batterie (1) configuré pour accueillir au moins une unité de batterie (46),
le boîtier de batterie (1) étant fabriqué à partir d'un élément formant plaque en métal et/ou en matière plastique,
l'élément formant plaque (21) étant fourni sous la forme d'un élément structural plan et
l'élément formant plaque (21) possédant au moins une ligne d'assistance à la flexion (24) qui est formée par une pluralité d'ouvertures (25) qui s'étendent en continu à travers l'élément formant plaque (21) ou par des affaiblissements de la matière et l'élément formant plaque (21) possédant un premier segment de plaque (22) qui forme un premier élément de fixation (4),
le premier élément de fixation (4) étant réalisé sous la forme d'une ouverture (6) qui s'étend en continu à travers le premier segment de plaque (22) et
l'élément formant plaque (21) possédant un deuxième segment de plaque (23) qui forme un deuxième élément de fixation (5),
le deuxième élément de fixation (5) étant réalisé sous la forme d'un élément à lamelles (7),
en vue d'une liaison réversible du premier élément de fixation (4) avec le deuxième élément de fixation (5), l'élément formant plaque (21) étant plié le long de l'au moins une ligne d'assistance à la flexion (24) et l'élément à lamelles (7) étant plié et/ou déformé en vue d'un arrangement de l'élément à lamelles (7) dans l'ouverture (6) de telle sorte que le premier segment de plaque (22) forme une première paroi de boîtier (2) et le deuxième segment de plaque (23) forme une deuxième paroi de boîtier,
le premier élément de fixation, (4) et le deuxième élément de fixation (5) étant reliés de manière réversible l'un à l'autre en vue d'une immobilisation de la première paroi de boîtier (2) par rapport à la deuxième paroi de boîtier (3).

2. Batterie selon la revendication précédente 1, **caractérisée en ce que**
l'élément formant plaque (21) possède au moins un troisième segment de plaque (28), le troisième segment de plaque (28) étant réalisé relié d'un seul tenant ou étant relié de manière réversible avec le premier segment de plaque (22) et/ou avec le deuxième segment de plaque (23) et
le premier segment de plaque (22) ou le deuxième segment de plaque (23) ou le troisième segment de plaque (28), qui forme une troisième paroi de boîtier (8), forme un troisième élément de fixation (17) et
le boîtier de batterie (1) possède un couvercle (16) qui forme un quatrième élément de fixation (19),
en vue d'une immobilisation du couvercle (16) par rapport à la première (2), à la deuxième (3) ou à la troisième paroi de boîtier (8), le quatrième élément de fixation (19) étant relié de manière réversible avec un troisième élément de fixation (17).

3. Batterie selon la revendication précédente 1 ou 2, **caractérisée en ce que**
un élément de refroidissement (44) est disposé au niveau d'une paroi de boîtier (2, 3, 8, 16) du boîtier de batterie (1) et
la paroi de boîtier (2, 3, 8, 16) est configurée de manière concave suivant un tracé s'éloignant de l'élément de refroidissement (44) de telle sorte que
une surface de contact (45) est garantie entre la paroi de boîtier (2, 3, 8, 16) et au moins une unité de batterie (46) accueillie dans le boîtier de batterie (1).

4. Batterie selon au moins l'une des revendications précédentes 1 à 3, **caractérisée en ce qu'**un élément ressort (9) au moins partiellement réversible est disposé dans le boîtier de batterie (1).

5. Batterie selon la revendication 4, **caractérisée en ce que**
au moins une paroi de boîtier (2, 3, 8, 16) forme un élément de butée (10) ou un élément de butée (10) est introduit dans le boîtier de batterie (1),
l'élément de butée (10) servant à une limitation de la déformation de l'élément ressort (9).

6. Batterie selon la revendication 5, **caractérisée en ce que**
une paroi de boîtier (2, 3, 8, 16) du boîtier de batterie (1) possède au moins une ouverture (48) pour l'arrangement d'une borne de cellule (49) et
un connecteur de cellule (50) est disposé dans le boîtier de batterie (1) de telle sorte que
des unités de batterie (46) accueillies dans le boîtier de batterie sont reliées électriquement,
la liaison du connecteur de cellule (50) avec une unité de batterie (46) étant établie par fusion de matières, notamment soudée ou brasée.

7. Procédé de fabrication d'une batterie selon au moins l'une des revendications 1 à 6, **caractérisé en ce que** un élément formant plaque en métal et/ou en matière plastique est fourni,
l'élément formant plaque (21) étant réalisé sous la forme d'un élément structural plan et
l'élément formant plaque (21) possédant au moins une ligne d'assistance à la flexion (24) qui èst formée par une pluralité d'ouvertures (25) qui s'étendent en continu à travers l'élément formant plaque (21) ou par des affaiblissements de la matière et l'élément formant plaque (21) possédant un premier segment de plaque (22) qui forme un premier élément de fixation (4),
le premier élément de fixation (4) étant réalisé sous la forme d'une ouverture (6) qui s'étend en continu à travers le premier segment de plaque (22) et
l'élément formant plaque (12) possédant un deuxième segment de plaque (23) qui forme un deuxième élément de fixation (5),
le deuxième élément de fixation (5) étant réalisé sous la forme d'un élément à lamelles (7),
en vue d'une liaison réversible du premier élément de fixation (4) avec le deuxième élément de fixation (5), l'élément formant plaque (21) étant plié le long de l'au moins une ligne d'assistance à la flexion (24) et l'élément à lamelles (7) étant plié et/ou déformé en vue d'un arrangement de l'élément à lamelles (7) dans l'ouverture (6),
de telle sorte que le premier segment de plaque (22) forme une première paroi de boîtier (2) et
le deuxième segment de plaque (23) forme une deuxième paroi de boîtier,
le premier élément de fixation (4) et le deuxième élément de fixation (5) étant reliés de manière réversible l'un à l'autre en vue d'une immobilisation de la première paroi de boîtier (2) par rapport à la deuxième paroi de boîtier (3).

8. Procédé de fabrication d'un boîtier de batterie selon la revendication 7,
l'élément formant plaque (21) formant un troisième élément de fixation (17) et le boîtier de batterie (1) étant relié à un couvercle (16), lequel forme un quatrième élément de fixation (19),
**caractérisé en ce que** le boîtier de batterie (1) est relié de manière réversible à un couvercle (16) par une liaison réversible du quatrième élément de fixation (19) avec le troisième élément de fixation (17).
